# EUROPEAN PATENT SPECIFICATION

(11) **EP 3 331 147 B1**
(45) Date of publication and mention of the grant of the patent: **16.09.2020**
(21) Application number: 17201473.0
(22) Date of filing: 14.11.2017
(51) Int. Cl.: H02M 3/156, H02M 3/335, H02M 1/00

(54) **CONVERTER CIRCUIT AND CURRENT SENSING**
UMRICHTERSCHALTUNG UND STROMERFASSUNG
CIRCUIT DE CONVERTISSEUR ET DETECTION DE COURANT

(30) Priority: 30.11.2016 GB 201620654
(43) Date of publication of application: 06.06.2018
(73) Proprietor: Tridonic GmbH & Co. KG, 6851 Dornbirn (AT)
(72) Inventor: Kelly, Jamie, Tyne & Wear, NE29 8AH (GB); Makwana, Deepak, Newcastle Upon Tyne, NE4 8UB (GB)
(74) Representative: Rupp, Christian

(56) References cited:
- JP-A- 2014 017 930
- US-A1- 2010 265 745
- US-B2- 9 444 326

## Description

### 1. Field of the invention

The present invention relates to a converter circuit, an operating device for lighting means with such a converter circuit, as well as a lighting device with such an operating device and lighting means. In addition, a method for controlling a converter circuit according to the present invention is proposed.

### 2. Technical background

In the prior art actively switched converter circuits for converting an input voltage to an output voltage in order to provide an operating voltage, operating current or operating power for lighting means, such as a LED, are well known. Such a converter circuit is disclosed in US 2010/265745 A1.

Ensuring on one side a high power factor (PF) and total harmonic distortion (THD) for such a converter circuit and on the other side reducing the costs for such a converter circuit as well as reducing the complexity of controlling the switch of such an actively switched converter circuit constitutes a common problem in the state of the art.

In addition, the sensing of a current in such a converter circuit without great effort constitutes a further problem in the state of the art.

Therefore, it is an object of the present invention to provide a converter circuit for converting an input voltage into an output voltage, which has a high power factor and total harmonic distortion, reduces the costs and the complexity of controlling the converter circuit as well as provides means for sensing a current in the converter circuit without great effort. In addition, it is an object of the present invention to provide an operating device for lighting means comprising such a converter circuit as well as to provide a lighting device with such an operating device and lighting means.

These and other objects, which become apparent upon reading the following description, are solved by the subject-matter of the independent claims. The dependent claims refer to preferred embodiments of the invention.

### 3. Summary of the invention

The invention is defined by the features of independent claim 1. The dependant claims recite advantageous embodiments of the invention. According to the present invention a converter circuit for converting an input voltage into an output voltage is provided, wherein the converter circuit comprises an actively switched boost converter stage with a first electrical energy storage element, an actively switched DC-to-DC converter stage with a second electrical energy storage element, a switch controllable by a controller for operating both the actively switched boost converter stage and the actively switched DC-to-DC converter stage, a first current sensing element, and a second current sensing element; wherein the first current sensing element and the second current sensing element are configured to sense the current of the first electrical energy storage element and the current of the second electrical energy storage element with respect to the low potential of the converter circuit, preferably with respect to ground potential, when the switch is in the conducting state.

That is, the present invention provides a converter circuit with an actively switched boost converter stage, an actively switched DC-to-DC converter stage and one switch, wherein the voltage conversion by the actively switched boost converter stage and the voltage conversion by the actively switched DC-to-DC converter stage is controllable by switching the one switch. Furthermore, the converter circuit comprises a first current sensing element and a second current sensing element that are arranged in the converter circuit such that they are configured to sense with respect to the low potential of the converter circuit, preferably with respect to ground potential, the current flowing through the boost converter stage, in particular through the first electrical energy storage element of the boost converter stage, and the current flowing through the DC-to-DC converter stage, in particular through the second electrical energy storage element of the DC-to-DC converter stage, when the switch is in the conducting stage.

Sensing current with respect to the low potential of the converter circuit, preferably with respect to ground potential, has a benefit over sensing current with respect to a variable potential, as the external circuitry for evaluating the sensing result is simplified.

Moreover, the control of two converter stages is achieved by only one switch used for actively switching the two converter stages and, thus, for controlling the voltage conversion by each of the two converter stages. As a result, the number of electronic components can be reduced, saving costs, and the complexity of control for the converter circuit is reduced.

The converter circuit is a circuit that is configured to convert an input voltage respectively input power into a higher or lower output voltage respectively output power by preferably cyclically switching the switch of the converter circuit.

An *"actively switched boost converter stage"* according to the present invention is a boost converter circuit respectively step-up converter circuit that is configured to convert an DC input voltage or rectified AC input voltage into a higher DC output voltage via preferably cyclically charging and discharging an electrical energy storage element, such as an inductor. The preferably cyclically charging and discharging of the electrical energy storage element is controlled by preferably cyclically switching a switch.

In the following the terms *"actively switched boost converter stage"* and *"boost converter"* are used as synonyms.

An *"actively switched DC-to-DC converter stage"* according to the present invention is a DC-to-DC converter circuit that is configured to convert an DC input voltage or rectified AC input voltage into a lower or higher DC output voltage via preferably cyclically charging and discharging an electrical energy storage element, such as an inductor. The preferably cyclically charging and discharging of the electrical energy storage element is controlled by preferably cyclically switching a switch. The boost convert circuit is one specific type of DC-to-DC converter circuit.

In the following the terms *"actively switched DC-to-DC converter stage"* and *"DC-to-DC converter stage"* are used as synonyms.

Preferably, the input voltage is a DC voltage, such as the voltage supplied by a battery, or a rectified AC voltage, such as a rectified mains voltage.

Preferably, the switch is a transistor, more preferably a MOSFET or a bipolar transistor.

Preferably, the first electrical energy storage element and the second electrical energy storage element are an inductor.

In case, the DC-to-DC converter stage is a DC-to-DC converter circuit with a transformer for galvanic isolation between the input and output, such as a flyback converter circuit, the second electrical energy storage element is preferably the primary winding of the transformer used for the galvanic isolation.

Preferably, the first current sensing element and the second current sensing element are shunt resistors, which preferably have the same resistance value.

Preferably, the input of the DC-to-DC converter stage is electrically connected in series to the output of the boost converter stage.

With other words, the boost converter stage and the DC-to-DC converter stage are preferably cascaded, such that the boost converter stage is followed by the DC-to-DC converter stage.

The boost converter stage and the DC-to-DC converter stage preferably form the voltage conversion line respectively power conversion line of the converter circuit, such that the boost converter stage is followed by the DC-to-DC converter stage in the voltage conversion line respectively power conversion line.

Preferably, the first current sensing element is electrically connected between a first node and a second node of the converter circuit; the second current sensing element is electrically connected to a first terminal of the switch and the second node of the converter circuit, such that the second current sensing element is electrically connected between the switch and the second node; and the low potential input terminal of the converter circuit is electrically connected to the first node.

In this regard it is noted that the switch has a first terminal and a second terminal, to which an electrical element may be connected, respectively, such that an electrical path is formed between the electrical element connected to the first terminal and the electrical element connected to the second terminal when the switch is in the conducting state.

The passage *"the low potential input terminal of the converter circuit* is *electrically connected to the first node"* means that the low potential input terminal corresponds to the first node, i.e. the low potential input terminal of the converter circuit and the first node of the converter circuit are on the same potential.

Preferably, the second electrical energy storage element is electrically connected to a second terminal of the switch, such that the switch is electrically connected between the second electrical energy storage element and the second current sensing element; and the first electrical energy storage element is electrically connected via a diode to the second terminal of the switch, such that the anode of the diode is electrically connected to the first electrical energy storage element and the cathode of the diode is electrically connected to the second terminal of the switch.

Preferably, the converter circuit comprises a third and fourth current sensing element; wherein the third current sensing element is electrically connected on one side with the node between the first terminal of the switch and the second current sensing element; and wherein the fourth current sensing element is electrically connected on one side with the first node of the converter circuit.

Preferably, the other side of the third current sensing element and the other side of the fourth current sensing element are electrically connected to each other.

Preferably, the third current sensing element and the fourth current sensing element are shunt resistors, which preferably have the same resistance value.

Preferably, the boost converter stage and the DC-to-DC-converter stage are electrically connected to each other via a third electrical energy storage element or via a passive power factor correction circuit, wherein preferably the passive power factor correction circuit is a valley fill circuit.

The third electrical energy storage element is preferably a capacitor. This has the benefit that the boost converter stage and the DC-to-DC converter stage may be coupled to each other in a cost effective way.

A passive power factor correction circuit, such as a valley fill circuit, for coupling the boost converter stage and the DC-to-DC converter stage with each other has the benefit, that the power factor (PF) and the total harmonic distortion (THD) of the converter circuit is improved.

Preferably, the DC-to-DC converter stage is a flyback converter stage or a buck converter stage.

That is, preferably, the DC-to-DC converter stage is a flyback converter circuit with a transformer for galvanic isolation between the input and output or a buck converter circuit.

Preferably, in case the DC-to-DC converter stage is a flyback converter stage and comprises the switch, the flyback converter stage is a primary side control flyback converter circuit, i.e. the switch is arranged on the primary side of the flyback converter stage with respect to the galvanic isolation.

Preferably, the DC-to-DC converter stage comprises the switch or the boost converter stage comprises the switch.

According to the present invention an operating device for operating lighting means is also provided, wherein the operating device comprises input terminals for supplying an input voltage to the operating device, output terminals for electrically connecting the lighting means to the operating device, and a converter circuit according to the present invention, as outlined above; wherein the converter circuit is configured to convert the input voltage supplied to the operating device to an operating voltage for operating the lighting means and to supply the operating voltage to the output terminals of the operating device.

In other words, the operating device is configured to operate lighting means, in that the converter circuit of the operating device is configured to convert an input voltage into an output voltage. As a result thereof, the operating device is able to provide at its output terminals an operating voltage, operating current or operating power for the operation of the lighting means.

Preferably, the operating device is a low power LED operating device respectively low power LED driver, such as e.g. an emergency operating driver or maintained mode driver for LEDs.

Preferably, the operating device comprises a controller, wherein the controller is configured to control the switching of the switch of the converter circuit.

That is, preferably, the controller of the operating device is configured to preferably cyclically switch the switch of the converter circuit in order to control the operation of the boost converter stage and the DC-to-DC converter stage.

Preferably, the controller is a microcontroller, an application-specific integrated circuit (ASIC) or a hybrid thereof.

Preferably, the controller is configured to control the switching of the switch of the converter circuit based on the current of the second electrical energy storage element.

With other words, preferably, the controller is configured to control the switch on the basis of the current flowing through the second electrical energy storage element of the DC-to-DC converter stage, which current is sensed by the first and second current sensing element.

Preferably, the controller is configured to obtain via the third current sensing element and the fourth current sensing element the current of the second electrical energy storage element.

According to the present invention an lighting device is also provided, wherein the lighting device comprises an operating device according to the present invention, as outlined above, and lighting means electrically connected to the output terminals of the operating device; wherein the operating device is configured to supply the lighting means with electrical energy.

That is, the operating device is configured to operate the lighting means by providing an operating voltage, operating current and/or operating power.

Preferably, the lighting means comprises at least one light source, such as a LED, a luminescent lamp or any other light source configured to transmit light.

More preferably, the lighting means comprises at least one LED. In case the lighting means comprises more than one LED, the LEDs of the lighting means are preferably electrical connected to each other in series and/or parallel.

The term *"LED"* is to be understood as comprising any type of light-emitting diode, such as organic LED, non-organic LED, low power LED, high power LED, etc.

According to a preferred embodiment, the operating device of the lighting device is a low power LED operating device respectively low power LED driver, such as e.g. an emergency operating driver or maintained mode driver for LEDs, and, preferably, the lighting means of the lighting device comprises at least one low power LED, such as e.g. an emergency LED for providing an emergency lighting.

The previous optional features may be combined in any way to form the method for controlling the converter circuit according to the present invention.

### 4. Description of preferred embodiments

In the following, preferred embodiments of the present invention are described exemplarily with reference to the enclosed figures, in which
- **Figure 1**: shows a conceptual block diagram of a preferred embodiment of the lighting device, the operating device and the converter circuit according to the present invention.
- **Figure 2**: shows a circuit diagram of a preferred embodiment of the lighting device, the operating device and the converter circuit according to the present invention.
- **Figure 3**: shows a circuit diagram of another preferred embodiment of the lighting device, the operating device and the converter circuit according to the present invention;
- **Figure 4**: shows an equivalent circuit diagram of the preferred embodiment of the converter circuit according to the present invention shown in Figure 3;
- **Figures 5a to 5e**: show equivalent circuit diagrams of the preferred embodiment of the converter circuit according to Figure 3 for different phases of a preferred embodiment of a discontinuous conduction mode control;
- **Figure 6**: shows electrical parameters of the preferred embodiment of the converter circuit according to Figure 3 for the different phases of the preferred embodiment of a discontinuous conduction mode control shown in Figures 5a to 5e;
- **Figure 7**: shows the conceptual block diagram of Figure 1, schematically indicating a preferred embodiment of sensing current according to the present invention;
- **Figure 8**: shows the circuit diagram of the preferred embodiment of the converter circuit according to the present invention shown in Figure 2 with a preferred embodiment of sensing current according to the present invention;
- **Figure 9**: shows the equivalent circuit diagram of the preferred embodiment of the converter circuit according to the present invention shown in Figure 2 with a preferred embodiment of sensing current according to the present invention.

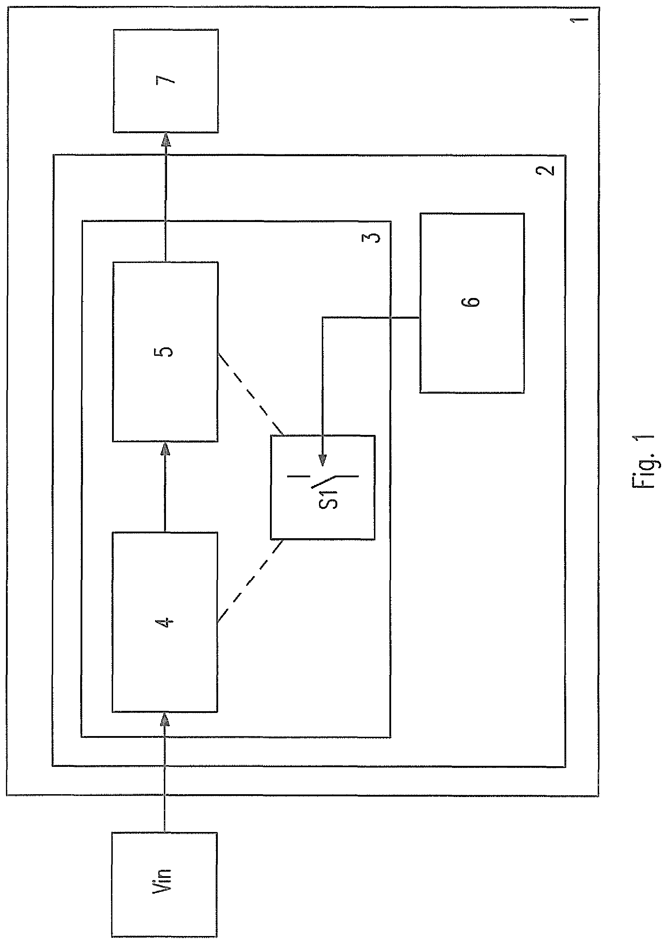

In the figures 1 to 9 corresponding features and electrical parameters are referenced by the same reference signs.

**Figure 1** shows a conceptual block diagram of a preferred embodiment of the lighting device, the operating device and the converter circuit according to the present invention.

According to Figure 1 the lighting device 1 comprises an operating device 2 and lighting means 7.

As outlined already above, the lighting means 7 preferably comprises at least one light source, such as a LED, a luminescent lamp or any other light source configured to transmit light.

More preferably, the lighting means comprises at least one LED. In case the lighting means comprises more than one LED, the LEDs of the lighting means are preferably electrical connected to each other in series and/or parallel.

The operating device 2 of Figure 1 comprises a converter circuit 3 and a controller 6.

The converter circuit 3 comprises an actively switched boost converter stage 4 (in the following referred to as *"boost converter stage"),* an actively switched DC-to-DC converter stage 5 (in the following referred to as *"DC-to-DC converter stage"*) and a switch S1. As indicated by the dashed lines the operation of both the boost converter stage 4 and the DC-to-DC converter stage 5 is controlled by the one switch S1 of the converter circuit 3.

Each of the boost converter stage 4 and the DC-to-DC converter stage 5 is configured to convert an input voltage into an output voltage by preferably cyclically charging and discharging a respective electrical energy storage element, such as an inductor. Thereby, the charging and discharging of the respective electrical energy storage element and, thus, the voltage conversion is controlled by the switching of the switch S1.

As outlined already above, preferably, the DC-to-DC converter stage is a buck converter stage or a flyback converter stage.

As shown in Figure 1 the boost converter stage 4 and the DC-to-DC converter stage 5 form the voltage conversion line respectively power conversion line of the converter circuit 3, in which the boost converter stage 4 is arranged in front of the DC-to-DC converter stage 5. That is, the boost converter stage 4 and the DC-to-DC converter stage are cascaded to form the voltage conversion line respectively power conversion line of the converter circuit 3. Thus, the boost converter stage 4 and the DC-to-DC converter stage 5 are connected in series to each other. The arrows indicate the voltage path through the voltage conversion line formed by the boost converter stage 4 and the DC-to-DC converter stage 5 of the converter circuit 3.

The converter circuit 3 is configured to convert a DC input voltage Vin or an rectified AC input voltage Vin into an output voltage in order to provide an operating voltage, operating current or operating power for the lighting means 7.

The controller 6 of the operating device 2 is preferably a microcontroller, application-specific integrated circuit (ASIC) or a hybrid thereof, that is configured to control the switching of the switch S1 of the converter circuit 3. Preferably, the controller 6 is configured to control the switch such that the converter circuit 3, in particular the boost converter stage 4 and the DC-to-Dc converter stage 5, are operated in the discontinuous conduction mode. The arrow from the controller 6 to the switch S1 indicates in Figure 1 that the controller is configured to control the switch and, thus, is configured to control the operation of the converter circuit 3, in particular the operation of the boost converter stage 4 and the DC-to-DC converter stage 5.

In Figure 1 there is no indication that the controller receives any sensed or measured electrical parameters from the converter circuit 3 or the lighting means 7, for controlling the switch S1 in order to control the operating voltage, operating current or operating power supplied by the operating device 2 to the lighting means 7. Nevertheless, the boost converter stage 4, the DC-to-DC converter stage 5, the converter circuit 3, the operating device 2, the lighting means 7 and/or the lighting device 1 may be configured such that the controller 6 is able to perform a feed-back control of the switch S1 on the basis of one or more electric parameters from any of the elements mentioned before.

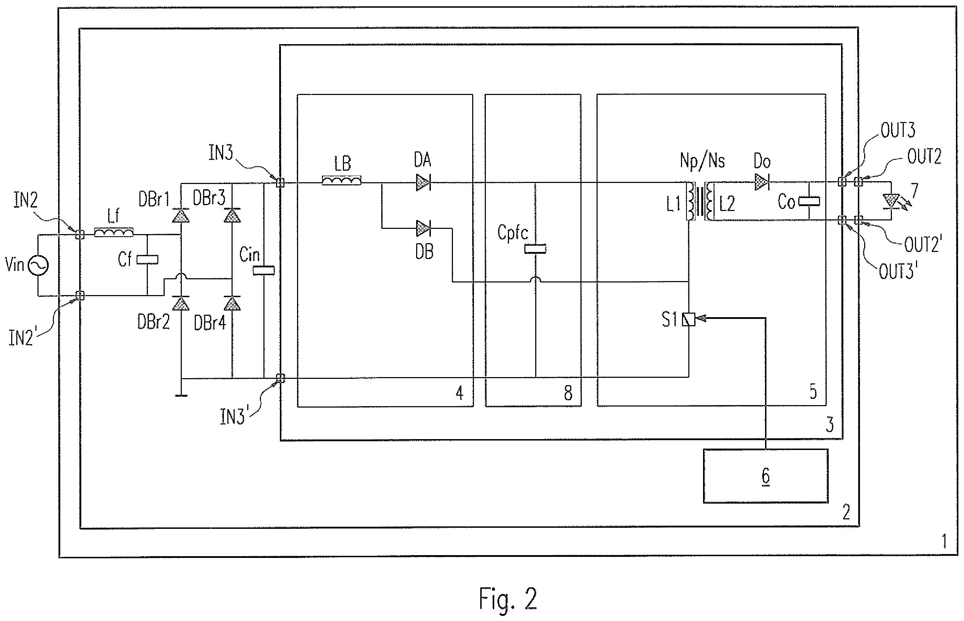

**Figure 2** shows a circuit diagram of a preferred embodiment of the lighting device, the operating device and the converter circuit according to the present invention.

The lighting device 1 comprises an operating device 2 and a lighting means 7 (represented in Figure 2 by the symbol for a LED), wherein the lighting means 7 are connected to the output terminals OUT2, OUT2' of the operating device 2.

The lighting means 7 are as described already above.

The operating device 2 comprises a high potential input terminal IN2 and a low potential input terminal IN2' for supplying an input voltage Vin, such as e.g. mains voltage, to the operating device 2.

Preferably, the operating device 2 comprises a filter circuit, formed by an inductor Lf and a capacitor Cf, and a rectifier circuit, formed by the four diodes DBr1, DBr2, DBr3 and DBr4, for filtering and rectifying the input voltage Vin supplied to the input terminals IN2, IN2' of the operating device 2. The filter circuit and rectifier circuit of the operating device 2 may also be differently implemented. Furthermore, the operating device may also not comprise a filter circuit and a rectifier circuit. In this case the input voltage Vin is preferably a DC voltage, such as the voltage of a battery, or a rectified AC voltage, such as a rectified mains voltage.

The operating device 2 also comprises a converter circuit 3 and a controller 6.

As shown in Figure 2, the input voltage Vin is stored in a capacitor Cin after having been filtered by the inductor Lf and capacitor Cf and having been rectified by the full-bridge rectifier circuit formed by the four diodes DBr1, DBr2, DBr3 and DBr4. Thus, in case the input voltage Vin is mains voltage, the capacitor Cin is an electrical energy storage element that provides to the converter circuit 3, in particular to the input terminals IN3, IN3' of the converter circuit 3, a filtered and rectified AC input voltage.

The converter circuit 3 according to Figure 2 comprises a boost converter stage 4 and a flyback converter stage 5, which are electrically connected respectively coupled via an electrical energy storage element 8, wherein the boost converter stage 4 is arranged in front of the flyback-converter stage 5.

The boost converter stage 4 comprises an electrical energy storage element in the form of an inductor LB and two diodes DA, DB. One side respectively one terminal of the inductor LB is electrically connected to the high potential input terminal IN3 of the converter circuit 3 and the other side respectively other terminal of the inductor LB is connected to the anode of the diode DA and to the anode of the diode DB.

In the present invention the terms "electrically connected", *"connected", "electrically coupled"* and *"coupled"* are used as synonyms. Furthermore, with respect to describing the connection of electrical elements in the present invention the terms "*a side"* of an electrical element and "*a terminal"* of an electrical element are used as synonyms. To describe in the present invention the two sides respectively terminals of an electrical element, to which another electrical element is connectable, the terms "*a side*/*terminal"* and *"another side*/*terminal"* of an electrical element and *"afirst side*/*terminal"* and "*a second side*/*terminal"* of an electrical element are used as synonyms.

The cathode of the diode DA is connected to the transformer of the flyback converter stage 5, in particular to a first terminal of the first inductor respectively first winding L1 of the transformer. The cathode of the diode DA is also connected to the capacitor Cpfc forming the electrical energy storage element 8, which connects the boost converter stage 4 and the flyback converter 5 stage to each other. The cathode of the diode DB is connected to the second terminal of the primary inductor respectively primary winding L1 of the transformer of the flyback converter stage 5 and to a second terminal of the switch S1 of the converter circuit 3, in particular of the flyback converter stage 5. Thus, the cathode of the diode DA is connected to the node between the transformer, in particular the primary winding L1 of the transformer, and the switch S1.

The flyback converter stage 5 of the converter circuit 3 comprises a transformer that galvanically isolates a primary side of the flyback converter stage 5 from a secondary side of the flyback converter stage 5.

Thus, the converter circuit 3 also has a primary side galvanically isolated by the transformer of the flyback converter stage 5 from a secondary side of the converter circuit 3. On the primary side of the converter circuit 3 the boost converter stage 4, the electrical energy storage element 8 and the primary side of the flyback converter stage 5 are arranged. On the secondary side of the converter circuit 3 the secondary side of the flyback converter stage 5 is arranged.

On the primary side of the flyback converter stage 5 the primary inductor respectively primary winding L1 of the transformer and the switch S1 of the converter circuit 3 are arranged. The primary winding L1 of the transformer is connected in series to the switch S1. In particular, the first terminal of the primary winding L1 is connected to the cathode of the diode DA of the boost converter stage 4 and the second terminal of the primary winding L1 of the transformer is connected to the second terminal of the switch S1. The first terminal of the switch S1 is connected to the low potential input terminal IN3' of the converter circuit 3 and to the capacitor Cpfc that forms the electrical energy storage element 8.

On the secondary side of the flyback converter stage 2 the secondary inductor respectively secondary winding L2 of the transformer, a diode Do and a capacitor Co are arranged. The diode Do is arranged such that a flow of current from the output OUT3, OUT3' of the converter circuit 3 to the primary side of the flyback converter stage 5 is prevented. In particular, the anode of the diode Do is connected to the secondary winding L2 of the transformer and the cathode of the diode Do is connected to the capacitor Co. The capacitor Co is arranged in parallel to the secondary winding L2 of the transformer in order to store the voltage respectively the electrical power transferred via the transformer from the primary side to the secondary side of the flyback converter stage 5. The diode Do and the capacitor Co rectify the voltage provided by the secondary winding L2 of the transformer.

The diode Do and the capacitor Co may also be arranged outside the flyback converter stage, as long as they are connected to the secondary winding L2 of the transformer of the flyback converter stage 5 and rectify the voltage supplied by the secondary winding L2 of the transformer.

The primary winding L1 of the transformer forms the electrical energy storage element of the flyback converter stage 5. The switch S1 of the flyback converter stage 5 forms the switch of the converter circuit 3.

That is, Figure 2 shows a preferred embodiment of the converter circuit according to the present invention, in which the DC-to-DC converter stage of the converter circuit is a flyback converter stage and in which the DC-to-DC converter stage comprises the switch of the converter circuit for controlling the operation of both the boost converter stage and the DC-to-DC converter stage.

As outlined above, the switch may also be differently arranged, such that the boost converter stage comprises the switch, and the DC-to-DC converter stage may also be differently implemented. For example, the DC-to-DC converter stage may also be a buck converter stage.

As indicated in Figure 2 by the arrow between the controller 6 of the operating device 2 and the switch S1 of the converter circuit 3, the controller 6 is configured to control the switch S1 in order to control the operation of the boost converter stage 4 and the flyback converter stage 5. In particular, the controller 6 is configured to cyclically switch the switch S1 in order to cyclically charge and discharge the electrical energy storage element LB of the boost converter stage 4 and the electrical energy storage element L1 of the flyback converter stage 5. By cyclically charging and discharging the electrical energy storage element LB of the boost converter stage 4 and the electrical energy storage element L1 of the flyback converter stage 5 the input voltage respectively electrical power supplied to the converter circuit 3 is converted to an output voltage respectively electrical power. The value of the voltage respectively electrical power output by the converter circuit 3 depends on the switching of the switch S1.

Preferably, the controller 6 of the operation circuit 2 is on the same potential as the primary side of the converter circuit 3.

The switch S1 and the controller 6 may be implemented as already outlined above.

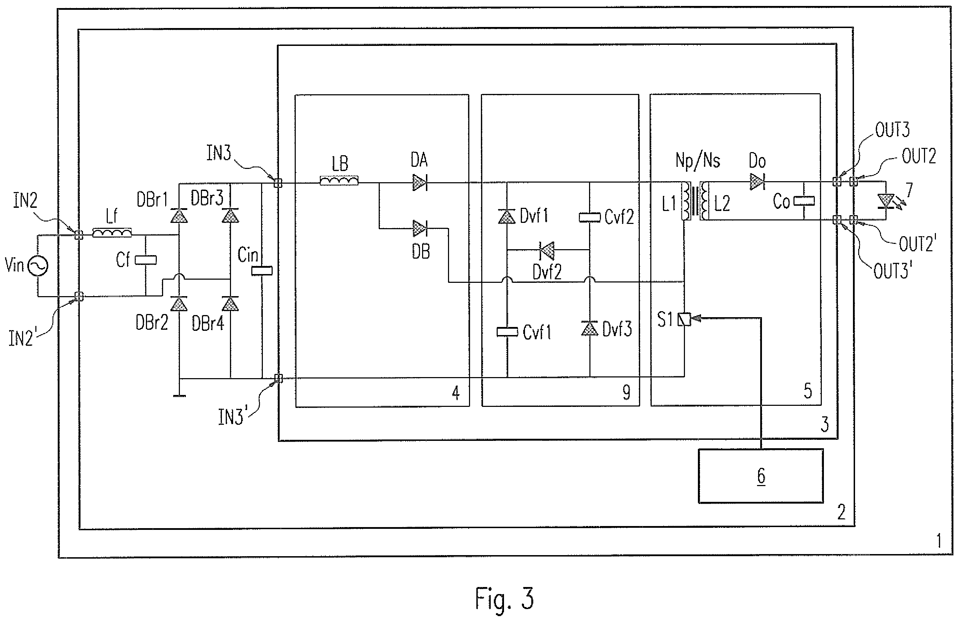

**Figure 3** shows a circuit diagram of another preferred embodiment of the lighting device, the operating device and the converter circuit according to the present invention. The preferred embodiment according to Figure 3 basically corresponds to the preferred embodiment according to Figure 2 and, thus, the above description of the preferred embodiment of Figure 2 is also valid for the preferred embodiment of Figure 3.

The two preferred embodiments differ in the way the boost converter stage 4 and the flyback converter stage 5 of the converter circuit 3 are connected to each other. According to the preferred embodiment of Figure 2 the boost converter stage 4 and the flyback converter stage 5 of the converter circuit 3 are connected to each other via a electrical energy storage element 8 formed by the capacitor Cpfc.

In contrast thereto, according to the preferred embodiment of Figure 3 the boost converter stage 4 and the flyback converter stage 5 of the converter circuit 3 are connected to each other by a passive power factor correction circuit 9. According to Figure 3 the passive power factor correction circuit is formed by a valley fill circuit comprising two capacitors Cvf1, Cvf2 and three diodes Dvf1, Dvf2, Dvf3. However, the passive power factor correction circuit may also be differently implemented.

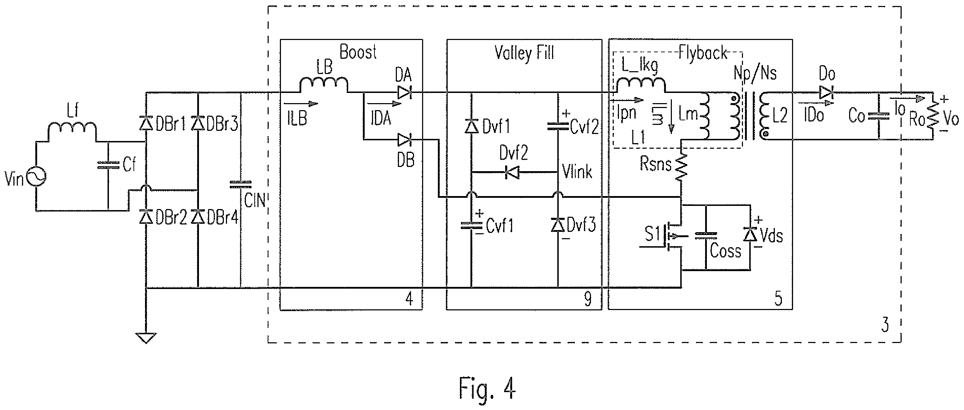

**Figure 4** shows an equivalent circuit diagram of the preferred embodiment of the converter circuit according to the present invention shown in Figure 3. The equivalent circuit diagram of Figure 4 basically corresponds to the circuit diagram of the converter circuit shown in Figure 3.

They differ in that the electrical energy storage element L1 of the flyback converter stage is represented in Figure 4 by inductors L_lkg and Lm connected in series, wherein the inductor Lm is connected in parallel to the primary winding of the transformer of the flyback converter stage 5. That is, the inductors L_lkg and Lm and the primary winding of the transformer of the flyback converter stage 5 shown in Figure 4 correspond to the primary inductor respectively primary winding L1 of the transformer of the flyback converter stage 5 shown in Figure 3.

Furthermore, according to Figure 4 the switch S1 is a MOSFET, wherein the output capacitance Coss and the body diode of the MOSFET are indicated. The control signals from the controller for switching the switch S1 are supplied to the gate terminal of the MOSFET. As outlined already above, the switch S1 may also be differently implemented.

Moreover, according to Figure 4, the diode Do and the capacitor Co, which rectify the voltage provided by the secondary winding L2 of the transformer of the flyback converter stage 5, are not part of the flyback converter stage 5.

The shunt resistor Rsns is a current sensing element which is connected to the primary side of the flyback converter stage 5 of the converter circuit 3 in order to sense the current flowing through the boost converter stage 4 and the current flowing through the DC-to-DC converter stage 5, when the switch S1 is in the conducting stage. As the shunt resistor Rsns is arranged on a potential not linked to ground it may be advantageous to sense the voltage over shunt resistor Rsns by the aid of a level shifter or optocoupler. It would be also possible to sense the voltage difference over the shunt resistor Rsns in order to measure the current flowing through the shunt resistor Rsns.

The load at the output of the converter circuit 3 is indicated in Figure 4 by a resistor Ro.

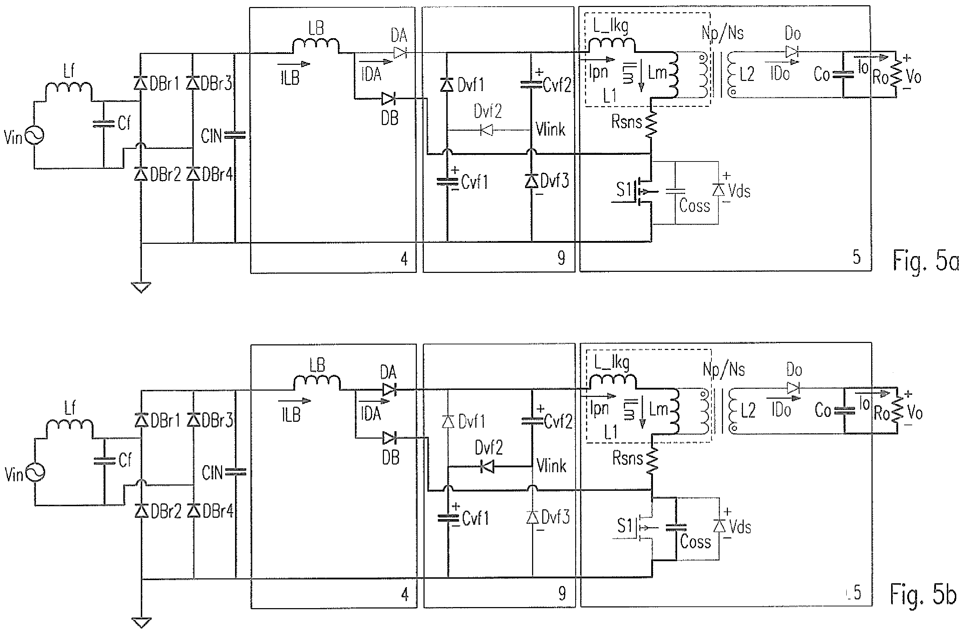

The equivalent circuit shown in Figure 4 is merely for explaining the operation of the converter circuit according to the present invention by way of example, when the switch S1 of the converter circuit 3 is controlled in the discontinuous conduction mode (cf. Figures 5a to 5e below).

**Figures 5a to 5e** show equivalent circuit diagrams of the preferred embodiment of the converter circuit according to Figure 3 for different phases of a preferred embodiment of a discontinuous conduction mode control.

**Figure 5a** shows the equivalent circuit diagram of the preferred embodiment of the converter circuit according to Figure 3 for a first phase of a control cycle of a preferred embodiment of the discontinuous conduction mode. In the first phase the switch S1 is in the conducting state. The diode DA of the boost converter stage 4 is blocked respectively reverse biased and the diode DB of the boost converter stage 4 is conducting. No electrical energy is transferred from the primary side to the secondary side of the flyback converter stage 5 via the transformer. The load Ro is supplied with electrical energy stored in the capacitor Co of the secondary side of the flyback converter stage 5.

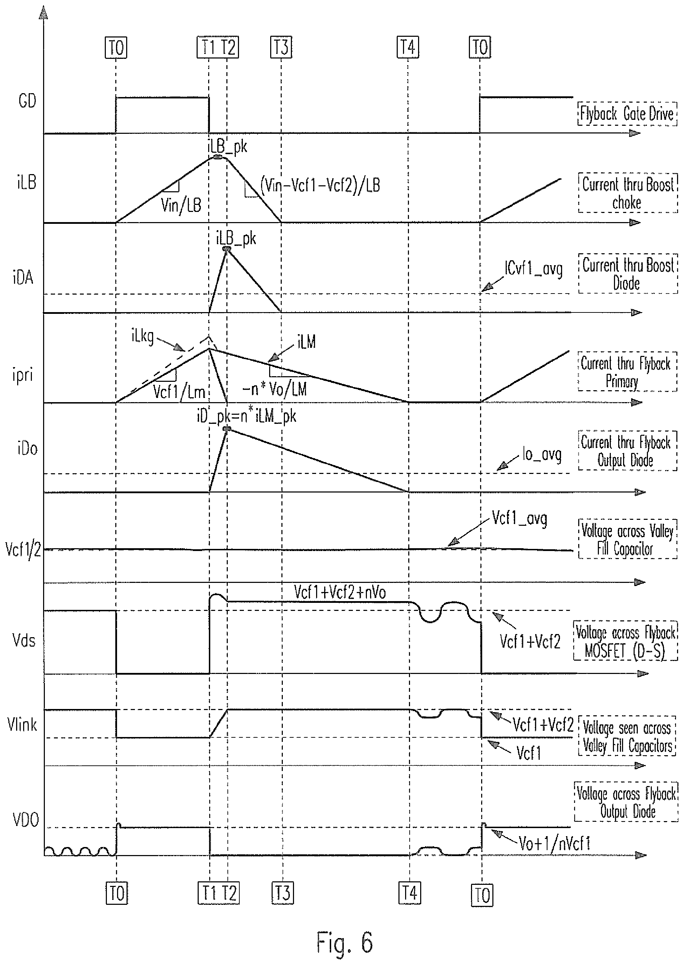

The first phase of a control cycle of the discontinuous conduction mode corresponds to the time period between the time T0 and T1 shown in Figure 6. As a result of the switch S1 being in the conducting state during the first phase the current ILB flowing through the electrical energy storage element LB of the boost converter stage 4 rises and the electrical energy storage element LB is charged (cf. graph *"iLB"* of Figure 6). The electrical energy storage element L1 of the flyback converter stage 5 is also charged with electrical energy stored in the capacitors Cvfi and Cvf2 of the valley fill circuit 9 and the current IPri flowing through the electrical energy storage element L1 of the flyback converter rises (cf. graph *"ipri"* of Figure 6). Both the current ILB of the electrical energy storage element LB and the current IPri of the electrical energy storage element L1 flow through the switch S1 in the first phase.

**Figure 5b** shows the equivalent circuit diagram of the preferred embodiment of the converter circuit according to Figure 3 for a second phase of a control cycle of a preferred embodiment of the discontinuous conduction mode. In the second phase the switch S1 is switched to the non-conducting state. As soon as the switch S1 is put in the non-conducting state, the diode DA of the boost converter stage 4 starts conducting while the diode DB of the boost converter stage is still conducting. No electrical energy is transferred from the primary side to the secondary side of the flyback converter stage 5 via the transformer. The load Ro is supplied with electrical energy stored in the capacitor Co of the secondary side of the flyback converter stage 5.

The second phase of a control cycle of the discontinuous conduction mode corresponds to the time period between the time T1 and T2 shown in Figure 6. Both the electrical energy storage element LB of the boost converter stage 4 and the electrical energy storage element L1 of the flyback converter stage 5 start to discharge and, thus, the current ILB of the electrical energy storage element LB and the current IPri of the electrical energy storage element L1 start to fall (cf. graphs *"iLB"* and *"ipri"* of Figure 6).

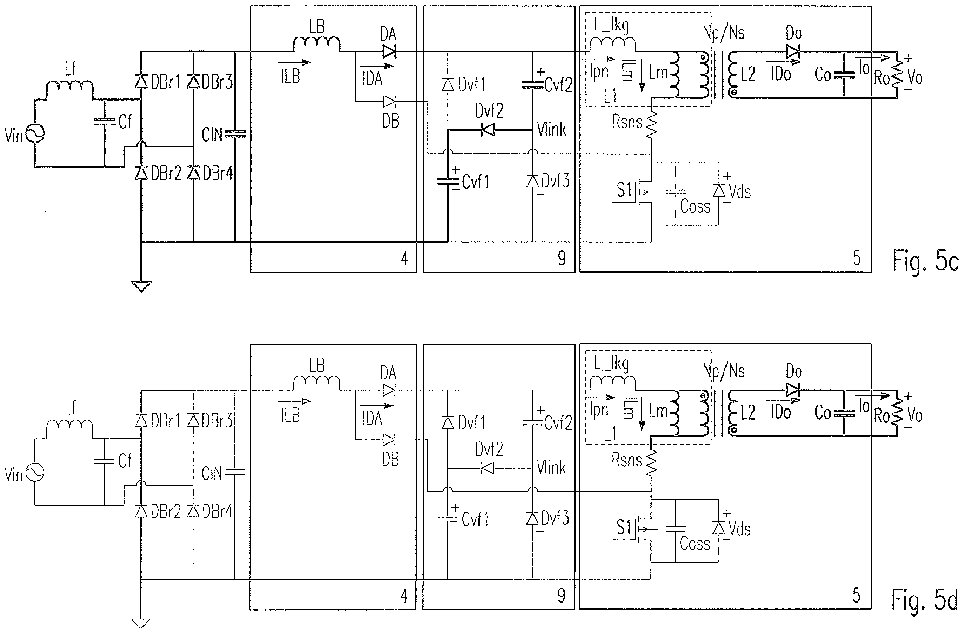

**Figure 5c** shows the equivalent circuit diagram of the preferred embodiment of the converter circuit according to Figure 3 for a third phase of a control cycle of a preferred embodiment of the discontinuous conduction mode. In the third phase the switch S1 is still in the non-conducting state. Electrical energy is transferred from the boost converter stage 4 to the capacitors Cvfi and Cvf2 of the valley fill circuit 9 and electrical energy is transferred from the primary side to the secondary side of the flyback converter stage 5 via the transformer.

The third phase of a control cycle of the discontinuous conduction mode corresponds to the time period between the time T2 and T3 shown in Figure 6. Both the electrical energy storage element LB of the boost converter stage 4 and the electrical energy storage element L1 are still being discharged and, thus, the current ILB of the electrical energy storage element LB and the current IPri of the electrical energy storage element L1 continue to fall (cf. graphs "*iLB*" and *"ipri"* of Figure 6). In the third phase the leakage electrical energy of the flyback converter circuit has dissipated, i.e. the inductor L_lkg representing in Figures 5a to 5e the leakage energy is completely discharged.

**Figure 5d** shows the equivalent circuit diagram of the preferred embodiment of the converter circuit according to Figure 3 for a fourth phase of a control cycle of a preferred embodiment of the discontinuous conduction mode. In the fourth phase the switch S1 is still in the non-conducting state. The boost converter stage 4 is no longer transferring electrical energy to the capacitors Cvfi and Cvf2 of the valley fill circuit 9. The flyback converter stage 5 is still transferring electrical energy from its primary side to its secondary side via the transformer.

The fourth phase of a control cycle of the discontinuous conduction mode corresponds to the time period between the time T3 and T4 shown in Figure 6. At the beginning of the fourth phase (at time T3), the electrical energy storage element LB of the boost converter stage 4 is completely discharged. That is, the current ILB of the electrical energy storage element LB has reached zero amperes (cf. graph *"iLB"* of Figure 6). Thus, the boost converter stage 4 reaches at the beginning of the fourth phase the non-conducting phase. The electrical energy storage element LB of the boost converter stage 4 is kept uncharged during the fourth phase. The electrical energy storage element L1 is still being discharged and, thus, the current IPri of the electrical energy storage element L1 continues to fall (cf. graphs *"ipri"* of Figure 6). Therefore, in the fourth phase the boost converter stage 4 assumes the non-conducting phase, while the flyback converter stage 5 is still in the conducting phase (cf. graphs *"iLB"* and *"ipri"* of Figure 6).

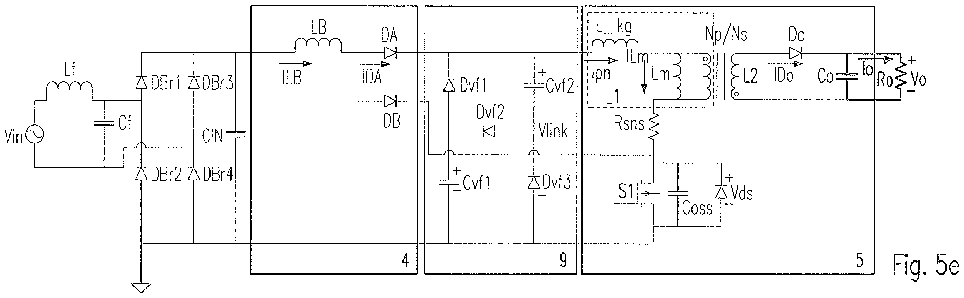

**Figure 5e** shows the equivalent circuit diagram of the preferred embodiment of the converter circuit according to Figure 3 for a fifth phase of a control cycle of a preferred embodiment of the discontinuous conduction mode. In the fifth phase the switch S1 is still in the non-conducting state. The boost converter stage 4 is still not transferring electrical energy to the capacitors Cvfi and Cvf2 of the valley fill circuit 9 and the flyback converter stage 5 is not transferring anymore electrical energy from its primary side to its secondary side via the transformer. In the fifth phase the conductor Co on the secondary side of the flyback converter stage 5 supplies the load Ro with electrical energy.

The fifth phase of a control cycle of the discontinuous conduction mode corresponds to the time period between the time T4 and To shown in Figure 6. The boost converter stage 4 is kept in the non-conducting stage during the fifth phase. Thus, the electrical energy storage element LB of the boost converter stage 4 is kept uncharged during the fifth phase. At the beginning of the fifth phase (at time T4), the electrical energy storage element L1 of the flyback converter stage 5 is completely discharged. That is, the current Ipri of the electrical energy storage element L1 has reached zero amperes (cf. graph *"ipri"* of Figure 6). Thus, the flyback converter stage 5 reaches at the beginning of the fifth phase the non-conducting phase. (cf. graph *"ipri"* of Figure 6). Therefore, in the fifth phase the flyback converter stage 5 reaches the non-conducting phase after the boost converter stage 4 has already reached the non-conducting phase in the fourth phase (cf. graphs *"iLB"* and *"ipri"* of Figure 6).

**Figure 6** shows electrical parameters of the preferred embodiment of the converter circuit according to Figure 3 for the different phases of the preferred embodiment of a discontinuous conduction mode control shown in Figures 5a to 5e.

As outlined already above, the first phase of a control cycle of the discontinuous conduction mode (shown in Figure 5a) corresponds to the time period between the time T0 and T1 of Figure 6; the second phase of the control cycle (shown in Figure 5b) corresponds to the time period between the time T1 and T2 of Figure 6; the third phase of the control cycle (shown in Figure 5c) corresponds to the time period between the time T2 and T3 of Figure 6; the fourth phase of the control cycle (shown in Figure 5d) corresponds to the time period between the time T3 and T4 of Figure 6 and the fifth phase of the control cycle (shown in Figure 5e) corresponds to the time period between the time T4 and T0 of Figure 6.

The graph *"GD"* of Figure 6 shows the control signal applied to the gate-terminal of the switch S1 for controlling the switching of the switch S1 over time. During a high signal the switch S1 is in the conducting state and during a low signal the switch S1 is in the non-conducting state.

The graph "*iLB*" of Figure 6 shows the current flow over time of the current ILB flowing through the electrical energy storage element LB of the boost converter stage 4.

The graph *"iDA"* of Figure 6 shows the current flow over time of the current IDA flowing through the diode DA of the boost converter stage 4.

The graph *"ipri"* of Figure 6 shows the current flow over time of the current IPri flowing through the electrical energy storage element L1 of the flyback converter stage 5. In the graph *"ipri"* the current flow over time of the current iLkg flowing through the inductor L_lkg and of the current iLm flowing through the inductor Lm are also indicated. The inductors L_lkg and Lm are part of the electrical energy storage element L1 of the flyback converter stage 5 in the equivalent circuit diagram of Figures 5a to 5e.

The graph "*iDo*" of Figure 6 shows the current flow over time of the current IDo flowing through the diode Do on the secondary side of the flyback converter stage 5.

The graph *"Vcf1*/*2"* of Figure 6 shows the average voltage Vcf1_avg of the capacitor Cvfi of the valley fill circuit 9 over time.

The graph *"Vds"* of Figure 6 shows the drain-source-voltage Vds across the MOSFET forming the switch Si of the flyback converter stage 5 over time.

The graph "*Vlink*" of Figure 6 shows the voltage seen across the capacitors Cvfi and Cvf2 of the valley fill circuit 9 over time.

The graph "*VDO*" of Figure 6 shows the voltage across the diode Do on the secondary side of the flyback converter stage 5 over time.

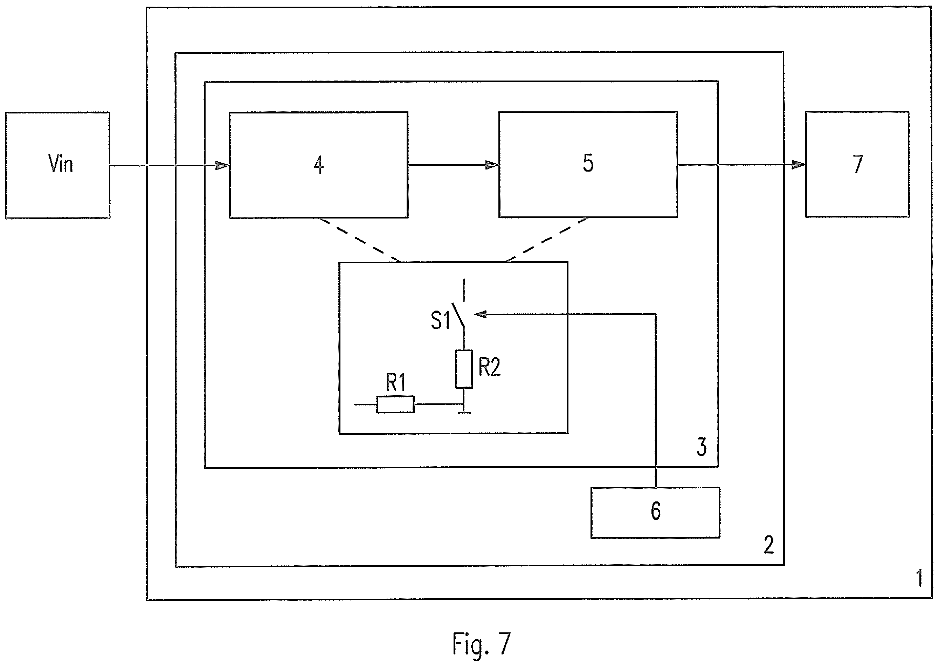

**Figure 7** shows the conceptual block diagram of Figure 1, schematically indicating a preferred embodiment of sensing current according to the present invention. The above description of Figure 1 is also valid for Figure 7.

According to Figure 7 the converter circuit 3 further comprises two shunt resistors R1, R2 as current sensing elements which are connected to the switch S1 of the converter circuit 3 in order to sense the current flowing through the boost converter stage 4 and the current flowing through the DC-to-DC converter stage 5, when the switch S1 is in the conducting stage.

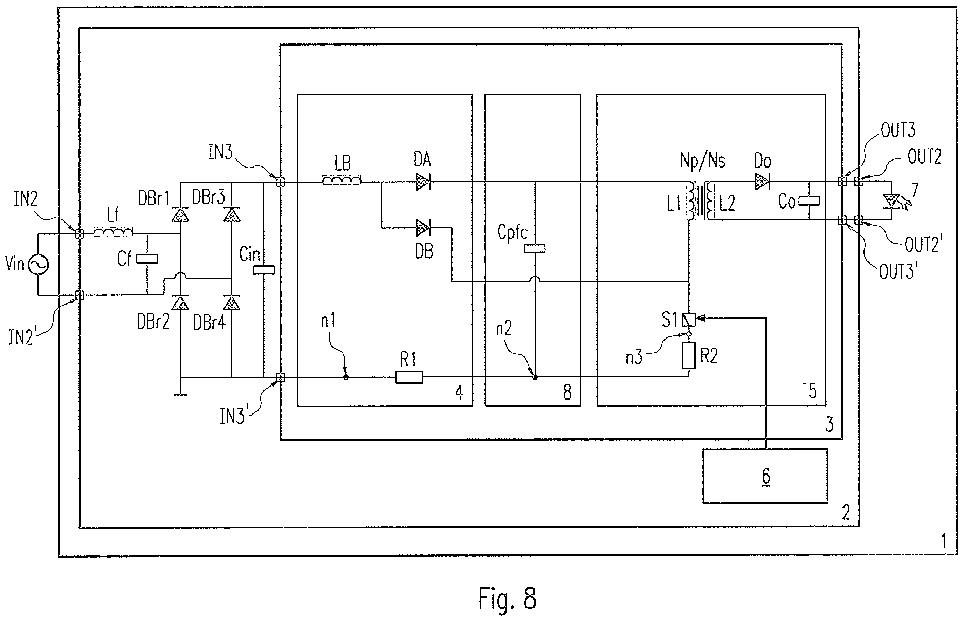

**Figure 8** shows the circuit diagram of the preferred embodiment of the converter circuit according to the present invention shown in Figure 2 with a preferred embodiment of sensing current according to the present invention.

The above description of Figure 2 is also valid for Figure 8.

Although the preferred embodiment of sensing current is shown in Figure 8 with respect to a converter circuit 3 comprising an electrical energy storage element 8 for coupling the boost converter stage and a flyback-converter stage for the DC-to-DC converter stage, the current sensing according to the present invention may be also implemented with a converter circuit 3 having a passive power factor correction circuit 9, such as a valley fill circuit, for coupling the boost converter stage 4 and the DC-to-DC converter stage 5 and/or having a different type of DC-to-DC converter stage 5 compared to the flyback converter stage of Figure 8.

According to Figure 8, the converter circuit 3 also comprises two current sensing elements in the form of two shunt resistors R1 and R2 for sensing the current flowing through the boost converter stage 4 and the current flowing through the flyback converter stage 5. In particular, the two shunt resistors R1 and R2 are configured to sense together the current flowing through the inductor LB of the boost converter stage 4 and the current flowing through the primary winding L1 of the transformer of the flyback converter stage 5.

The shunt resistor R1 is connected between a first node n1 and a second node n2 of the converter circuit 3. The first node n1 corresponds to the low potential input terminal IN3' of the converter circuit 3. The shunt resistor R2 is connected to the first terminal of the switch S1 and the second node n2 of the converter circuit 3. The node between the first terminal of the switch S1 and the shunt resistor R2 is referred to as the third node n3. The capacitor Cpfc forming the electrical energy storage element 8 is also connected on one side to the second node n2.

When the switch S1 is in the conducting state, the current of the boost converter stage 4 and the current of the flyback converter stage 5 flow through the conducting switch S1 and, thus, are sensed by the resistor R2. The current of the boost converter stage 4, in particular of the inductor LB, flows via the diode DB and the switch S1 to the shunt resistor R2, while the diode DA is reverse biased, when the switch S1 is in the conducting state. All the current that flows through the primary winding L1 of the transformer of the flyback converter stage 5 is sourced from the capacitor Cpfc and flows via the switch S1 to the shunt resistor R2, when the switch S1 is conducting. Thus, both the current of the boost converter stage 4 and the current of the flyback converter stage 5 flow through the shunt resistor R2, when the switch S1 is in the conducting state.

However, only the current of the boost converter stage 4 also flows through the shunt resistor R1.

Therefore, the sensing result of the shunt resistor R2 is the sum of the current of the boost converter stage 4 and the current of the flyback converter stage 5 and the sensing result of the shunt resistor R1 is only the current of the boost converter stage 4.

Thus, by subtracting the sensing result of the shunt resistor R1 from the sensing result of the shunt resistor R2 the current of the flyback converter stage 5 is obtained.

Therefore, preferably, the sensing results of the shunt resistor R1 and the shunt resistor R2 are feed to the controller 6 (not shown in Figure 8). The controller 6 may then determine on the basis of these sensing results the current of the flyback converter stage 5 and, thus, may control the switch S1 on the basis of the current of the flyback converter stage 5.

Preferably, the shunt resistors R1 and R2 have the same resistance value.

The shunt resistors R1 and R2 of the embodiment of Figure 8 offer the advantage of measurements on shunt resistors linked to ground where no level shifter or opto-coupler is necessary to sense the signals at the measurement points. Such arrangement would provide less complicated measurement in comparison to the embodiment of Figure 4 where the shunt resistor Rsns is arranged on a position not directly inked to ground.

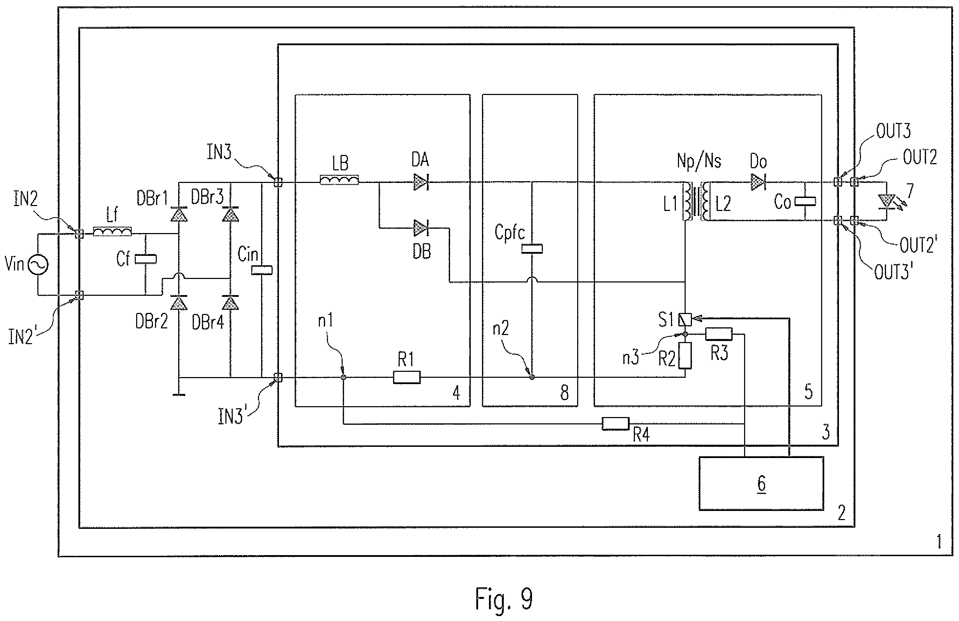

**Figure 9** shows the equivalent circuit diagram of the preferred embodiment of the converter circuit according to the present invention shown in Figure 2 with a preferred embodiment of sensing current according to the present invention.

The preferred embodiment of sensing current according to Figure 9 basically corresponds to the preferred embodiment of sensing current according to Figure 8 and, thus, the above description of the preferred embodiment of Figure 8 is also valid for the preferred embodiment of Figure 9. The above description of Figure 2 is also valid for Figure 9.

The embodiment according to Figure 9 differs from the embodiment according to Figure 8 in that the converter circuit 3 according to Figure 9 comprises two additional current sensing elements in the form of two addition shunt resistors R3 and R4. The two additional shunt resistors R3 and R4 are provided in the converter circuit 3 for feeding the sensing results of the shunt resistors R1 and R2 to the controller 6 of the operating device 2.

According to Figure 9, the shunt resistor R4 is connected on one side to the first node n1 of the converter circuit 3 and the shunt resistor R3 is connected on one side to the third node n3 between the switch S1 and the shunt resistor R2 of the converter circuit 3. The other side of the shunt resistor R4 and the other side of the shunt resistor R3 are connected to each other and to the controller 6.

By connecting the shunt resistors R3 and R4 to each other the sensing result of the shunt resistor R1 is subtracted from the sensing result of the shunt resistor R2. Therefore, only the value of the current of the flyback converter stage 5 is fed to the controller 6.

## Claims

1. Operating device (2) for operating lighting means (7), wherein the operating device (2) comprises:
• input terminals (IN2, IN2') for supplying an input voltage (Vin) to the operating device (2),
• output terminals (OUT2, OUT2') for electrically connecting the lighting means (7) to the operating device (2), and
• a converter circuit (3) configured to convert the input voltage (Vin) into an output voltage, wherein the converter circuit (3) comprises
∘ an actively switched boost converter stage (4) with a first electrical energy storage element (LB),
∘ an actively switched DC-to-DC converter stage (5) with a second electrical energy storage element (L1),
∘ a first diode (DA, DB), connected with its anode-side to the first electrical energy storage element (LB), and with its cathode side to a first terminal of the second electrical energy storage element (L1),
∘ a second diode (DB), connected with its anode-side to the first electrical energy storage element (LB), and with its cathode side to a second terminal of the second electrical energy storage element (L1),
∘ a switch (S1) controllable by a controller (6) configured to operate both the actively switched boost converter stage (4) and the actively switched DC-to-DC converter stage (5);
**characterized in that** the converter circuit (3) further comprises
∘ a first current sensing element (R1),
∘ a second current sensing element (R2),
∘ wherein the first current sensing element (R1) is configured to sense a current of the first electrical energy storage element (LB) with respect to a low potential of the converter circuit (3) without a current of the second electrical energy storage element (L1), when the switch (S1) is in the conducting state,
∘ wherein the second current sensing element (R2) is configured to sense the current of the first electrical energy storage element (LB) together with the current of the second electrical energy storage element (L1) with respect to the low potential of the converter circuit (3), preferably with respect to ground potential, when the switch (S1) is in the conducting state,
∘ wherein the first current sensing element (R1) is electrically connected between a first node (n1) and a second node (n2) of the converter circuit (3),
wherein the second current sensing element (R2) is electrically connected to a first terminal of the switch (S1) and the second node (n2) of the converter circuit (3), such that the second current sensing element (R2) is electrically connected between the switch (S1) and the second node (n2), and
wherein a low potential input terminal (IN3') of the converter circuit (3) is electrically connected to the first node (n1),
∘ wherein the converter circuit (3) comprises a third and fourth current sensing element (R3, R4),
wherein the third current sensing element (R3) is electrically connected on one side with a node (n3) between the first terminal of the switch (S1) and the second current sensing element (R2),
wherein the fourth current sensing element (R4) is electrically connected on one side with the first node (n1) of the converter circuit (3),
wherein the other side of the third current sensing element (R3) and the other side of the fourth current sensing element (R4) are electrically connected to each other,
wherein the converter circuit (3) is configured to convert the input voltage (Vin) supplied to the operating device (2) to an operating voltage, being the output voltage, for operating the lighting means (7) and to supply the operating voltage to the output terminals (OUT2, OUT2') of the operating device (2),
• the controller (6), wherein the controller (6) is connected to the other side of the third current sensing element (R3) and the other side of the fourth current sensing element (R4), and the controller (6) is configured to obtain via the third current sensing element (R3) and the fourth current sensing element (R4) the current of the second electrical energy storage element (L1) without the current of the first electrical energy storage element (LB), and the controller (6) is further configured to control a switching of the switch (S1) of the converter circuit (3) based on the current of the second electrical energy storage element (L1).

2. Operating device (2) according to claim 1,
- wherein the first current sensing element (R1) and the second current sensing element (R2) are shunt resistors, which preferably have a same resistance value.

3. Operating device (2) according to claim 1 or 2,
- wherein an input of the DC-to-DC converter stage (5) is electrically connected in series to an output of the boost converter stage (4).

4. Operating device (2) according to any of the preceding claims,
- wherein the second electrical energy storage element (L1) is electrically connected to a second terminal of the switch (S1), such that the switch (S1) is electrically connected between the second electrical energy storage element (L1) and the second current sensing element (R2); and
- wherein the first electrical energy storage element (R1) is electrically connected via the second diode (DB) to the second terminal of the switch (S1), such that the anode of the second diode (DB) is electrically connected to the first electrical energy storage (LB) element and the cathode of the second diode (DB) is electrically connected to the second terminal of the switch (S1).

5. Operating device (2) according to any of the preceding claims,
- wherein the third current sensing element (R3) and the fourth current sensing element (R4) are shunt resistors, which preferably have the same resistance value.

6. Operating device (2) according to any of the preceding claims,
- wherein the boost converter stage (4) and the DC-to-DC-converter stage (5) are electrically connected to each other via a third electrical energy storage element (8) or via a passive power factor correction circuit (9), wherein preferably the passive power factor correction circuit (9) is a valley fill circuit.

7. Operating device (2) according to any of the preceding claims,
- wherein the DC-to-DC converter stage (5) is a flyback converter stage or a buck converter stage.

8. Operating device (2) according to any of the preceding claims,
- wherein the DC-to-DC converter stage (5) comprises the switch (Si); or
- wherein the boost converter stage (4) comprises the switch (S1).

9. Lighting device (1) comprising
- an operating device (2) according to any of the preceding claims, and
- lighting means (7) electrically connected to the output terminals (OUT2, OUT2') of the operating device (2),
- wherein the operating device (2) is configured to supply the lighting means (7) with electrical energy.

## Patentansprüche

1. Betriebsvorrichtung (2) zum Betreiben von Leuchtmitteln (7), wobei die Betriebsvorrichtung (2) umfasst:
• Eingangsklemmen (IN2, IN2') zum Zuführen einer Eingangsspannung (Vin) an die Betriebsvorrichtung (2),
• Ausgangsklemmen (OUT2, OUT2') zum elektrischen Verbinden der Leuchtmittel (7) mit der Betriebsvorrichtung (2), und
• eine Wandlerschaltung (3), die konfiguriert ist zum Umwandeln der Eingangsspannung (Vin) in eine Ausgangsspannung, wobei die Wandlerschaltung (3) umfasst:
∘ eine aktiv geschaltete Aufwärtswandlerstufe (4) mit einem ersten elektrischen Energiespeicherelement (LB),
∘ eine aktiv geschaltete DC/DC-Wandlerstufe (5) mit einem zweiten elektrischen Energiespeicherelement (L1),
∘ eine erste Diode (DA, DB), die mit ihrer Anodenseite mit dem ersten elektrischen Energiespeicherelement (LB) und mit ihrer Kathodenseite mit einer ersten Klemme des zweiten elektrischen Energiespeicherelements (L1) verbunden ist,
∘ eine zweite Diode (DB), die mit ihrer Anodenseite mit dem ersten elektrischen Energiespeicherelement (LB) und mit ihrer Kathodenseite mit einer zweiten Klemme des zweiten elektrischen Energiespeicherelements (L1) verbunden ist,
∘ einen Schalter (S1), der steuerbar ist durch eine Steuereinheit (6), die konfiguriert ist zum Betreiben sowohl der aktiv geschalteten
Aufwärtswandlerstufe (4) als auch der aktiv geschalteten DC/DC-Wandlerstufe (5);
**dadurch gekennzeichnet, dass** die Wandlerschaltung (3) ferner umfasst:
∘ ein erstes Stromerfassungselement (R1),
∘ ein zweites Stromerfassungselement (R2),
∘ wobei das erste Stromerfassungselement (R1) konfiguriert ist zum Erfassen eines Stroms des ersten elektrischen Energiespeicherelements (LB) in Bezug auf ein niedriges Potential der Wandlerschaltung (3) ohne einen Strom des zweiten elektrischen Energiespeicherelements (L1), wenn der Schalter (S1) in dem leitenden Zustand ist,
∘ wobei das zweite Stromerfassungselement (R2) konfiguriert ist zum Erfassen des Stroms des ersten elektrischen Energiespeicherelements (LB) zusammen mit dem Strom des zweiten elektrischen Energiespeicherelements (L1) in Bezug auf das niedrige Potential der Wandlerschaltung (3), vorzugsweise in Bezug auf das Erdpotential, wenn der Schalter (S1) in dem leitenden Zustand ist,
∘ wobei das erste Stromerfassungselement (R1) zwischen einem ersten Knoten (n1) und einem zweiten Knoten (n2) der Wandlerschaltung (3) elektrisch verbunden ist,
wobei das zweite Stromerfassungselement (R2) mit einer ersten Klemme des Schalters (S1) und dem zweiten Knoten (n2) der Wandlerschaltung (3) elektrisch verbunden ist, sodass das zweite Stromerfassungselement (R2) zwischen dem Schalter (S1) und dem zweiten Knoten (n2) elektrisch verbunden ist; und
wobei eine Eingangsklemme mit niedrigem Potential (IN3') der Wandlerschaltung (3) mit dem ersten Knoten (n1) elektrisch verbunden ist,
∘ wobei die Wandlerschaltung (3) ein drittes und viertes Stromerfassungselement (R3, R4) umfasst,
wobei das dritte Stromerfassungselement (R3) auf einer Seite mit einem Knoten (n3) zwischen der ersten Klemme des Schalters (S1) und dem zweite Stromerfassungselement (R2) elektrisch verbunden ist,
wobei das vierte Stromerfassungselement (R4) auf einer Seite mit dem ersten Knoten (n1) der Wandlerschaltung (3) elektrisch verbunden ist,
wobei die andere Seite des dritten Stromerfassungselements (R3) und die andere Seite des vierten Stromerfassungselements (R4) elektrisch miteinander verbunden sind,
wobei die Wandlerschaltung (3) dazu konfiguriert ist, die der Betriebsvorrichtung (2) zugeführte Eingangsspannung (Vin) in eine Betriebsspannung, als Ausgangsspannung, zum Betreiben der Leuchtmittel (7) umzuwandeln und die Betriebsspannung den Ausgangsklemmen (OUT2, OUT2') der Betriebsvorrichtung (2) zuzuführen,
• die Steuereinheit (6), wobei die Steuereinheit (6) mit der anderen Seite des dritten Stromerfassungselements (R3) und der anderen Seite des vierten Stromerfassungselements (R4) verbunden ist, und die Steuereinheit (6) dazu konfiguriert ist, über das dritte Stromerfassungselement (R3) und das vierte Stromerfassungselement (R4) den Strom des zweiten elektrischen Energiespeicherelements (L1) ohne den Strom des ersten elektrischen Energiespeicherelements (LB) zu erhalten, und die Steuereinheit (6) ferner zum Steuern eines Schaltens des Schalters (S1) der Wandlerschaltung (3) basierend auf dem Strom des zweiten elektrischen Energiespeicherelements (L1) konfiguriert ist.

2. Betriebsvorrichtung (2) nach Anspruch 1,
- wobei das erste Stromerfassungselement (R1) und das zweite Stromerfassungselement (R2) Shunt-Widerstände, vorzugsweise mit einem gleichen Widerstandswert, sind.

3. Betriebsvorrichtung (2) nach Anspruch 1 oder 2,
- wobei ein Eingang der DC/DC-Wandlerstufe (5) mit einem Ausgang der Aufwärtswandlerstufe (4) elektrisch in Reihe geschaltet ist.

4. Betriebsvorrichtung (2) nach einem der vorstehenden Ansprüche,
- wobei das zweite elektrische Energiespeicherelement (L1) mit einer zweiten Klemme des Schalters (S1) elektrisch verbunden ist, sodass der Schalter (S1) zwischen dem zweiten elektrischen Energiespeicherelement (L1) und dem zweiten Stromerfassungselement (R2) elektrisch verbunden ist; und
- wobei das erste elektrische Energiespeicherelement (R1) über die zweite Diode (DB) mit der zweiten Klemme des Schalters (S1) elektrisch verbunden ist, sodass die Anode der zweiten Diode (DB) mit dem ersten elektrischen Energiespeicherelement (LB) elektrisch verbunden ist und die Kathode der zweiten Diode (DB) mit der zweiten Klemme des Schalters (S1) elektrisch verbunden ist.

5. Betriebsvorrichtung (2) nach einem der vorstehenden Ansprüche,
- wobei das dritte Stromerfassungselement (R3) und das vierte Stromerfassungselement (R4) Shunt-Widerstände, vorzugsweise mit dem gleichen Widerstandswert, sind.

6. Betriebsvorrichtung (2) nach einem der vorstehenden Ansprüche,
- wobei die Aufwärtswandlerstufe (4) und die DC/DC-Wandlerstufe (5) über ein drittes elektrisches Energiespeicherelement (8) oder über eine passive Leistungsfaktorkorrekturschaltung (9) elektrisch miteinander verbunden sind, wobei vorzugsweise die passive Leistungsfaktorkorrekturschaltung (9) eine Talfüllschaltung ist.

7. Betriebsvorrichtung (2) nach einem der vorstehenden Ansprüche,
- wobei die DC/DC-Wandlerstufe (5) eine Sperrwandlerstufe oder eine Abwärtswandlerstufe ist.

8. Betriebsvorrichtung (2) nach einem der vorstehenden Ansprüche,
- wobei die DC/DC-Wandlerstufe (5) den Schalter (S1) umfasst; oder
- wobei die Aufwärtswandlerstufe (4) den Schalter (S1) umfasst.

9. Leuchtvorrichtung (1), umfassend
- eine Betriebsvorrichtung (2) nach einem der vorstehenden Ansprüche, und
- Leuchtmittel (7), die elektrisch mit den Ausgangsklemmen (OUT2, OUT2') der Betriebsvorrichtung (2) verbunden sind,
- wobei die Betriebsvorrichtung (2) konfiguriert ist zum Versorgen des Leuchtmittels (7) mit elektrischer Energie.

## Revendications

1. Dispositif de commande (2) pour l'actionnement de moyens d'éclairage (7), dans lequel le dispositif de commande (2) comprend :
• des bornes d'entrée (IN2, IN2') pour la fourniture d'une tension d'entrée (Vin) au dispositif de commande (2),
• des bornes de sortie (OUT2, OUT2') pour la connexion électrique des moyens d'éclairage (7) au dispositif de commande (2), et
• un circuit convertisseur (3) configuré pour convertir la tension d'entrée (Vin) en une tension de sortie, dans lequel le circuit convertisseur (3) comprend :
∘ un étage convertisseur élévateur à commutation active (4) avec un premier élément de stockage d'énergie électrique (LB),
∘ un étage convertisseur continu-continu à commutation active (5) avec un deuxième élément de stockage d'énergie électrique (L1),
∘ une première diode (DA, DB), reliée avec son côté anode au premier élément de stockage d'énergie électrique (LB), et avec son côté cathode à une première borne du deuxième élément de stockage d'énergie électrique (L1),
∘ une deuxième diode (DB), reliée avec son côté anode au premier élément de stockage d'énergie électrique (LB), et avec son côté cathode à une deuxième borne du deuxième élément de stockage d'énergie électrique (L1),
∘ un commutateur (S1) commandable par un contrôleur (6) configuré pour actionner à la fois l'étage convertisseur élévateur à commutation active (4) et l'étage convertisseur continu-continu à commutation active (5) ;
**caractérisé en ce que** le circuit convertisseur (3) comprend en outre
∘ un premier élément de détection de courant (R1),
∘ un deuxième élément de détection de courant (R2),
∘ dans lequel le premier élément de détection de courant (R1) est configuré pour détecter un courant du premier élément de stockage d'énergie électrique (LB) par rapport à un potentiel bas du circuit convertisseur (3) sans un courant du deuxième élément de stockage d'énergie électrique (L1), lorsque le commutateur (S1) est à l'état conducteur,
∘ dans lequel le deuxième élément de détection de courant (R2) est configuré pour détecter le courant du premier élément de stockage d'énergie électrique (LB) conjointement avec le courant du deuxième élément de stockage d'énergie électrique (L1) par rapport au potentiel bas du circuit convertisseur (3), de préférence par rapport au potentiel de masse, lorsque le commutateur (S1) est à l'état conducteur,
∘ dans lequel le premier élément de détection de courant (R1) est électriquement relié entre un premier nœud (n1) et un deuxième nœud (n2) du circuit convertisseur (3),
dans lequel le deuxième élément de détection de courant (R2) est électriquement relié à une première borne du commutateur (S1) et au deuxième nœud (n2) du circuit convertisseur (3), de telle sorte que le deuxième élément de détection de courant (R2) est électriquement relié entre le commutateur (S1) et le deuxième nœud (n2), et
dans lequel une borne d'entrée à faible potentiel (IN3') du circuit convertisseur (3) est électriquement reliée au premier nœud (n1),
∘ dans lequel le circuit convertisseur (3) comprend un troisième et un quatrième élément de détection de courant (R3, R4),
dans lequel le troisième élément de détection de courant (R3) est électriquement relié d'un côté à un nœud (n3) entre la première borne du commutateur (S1) et le deuxième élément de détection de courant (R2),
dans lequel le quatrième élément de détection de courant (R4) est électriquement relié d'un côté au premier nœud (n1) du circuit convertisseur (3),
dans lequel l'autre côté du troisième élément de détection de courant (R3) et l'autre côté du quatrième élément de détection de courant (R4) sont électriquement reliés l'un à l'autre,
dans lequel le circuit convertisseur (3) est configuré pour convertir la tension d'entrée (Vin) fournie au dispositif de commande (2) à une tension d'actionnement, étant la tension de sortie, pour l'actionnement des moyens d'éclairage (7) et pour fournir la tension de fonctionnement aux bornes de sortie (OUT2, OUT2') du dispositif de commande (2),
• le contrôleur (6), où le contrôleur (6) est relié à l'autre côté du troisième élément de détection de courant (R3) et à l'autre côté du quatrième élément de détection de courant (R4), et le contrôleur (6) est configuré pour obtenir par le biais du troisième élément de détection de courant (R3) et du quatrième élément de détection de courant (R4) le courant du deuxième élément de stockage d'énergie électrique (L1) sans le courant du premier élément de stockage d'énergie électrique (LB), et le contrôleur (6) est en outre configuré pour commander une commutation du commutateur (S1) du circuit convertisseur (3) en fonction du courant du deuxième élément de stockage d'énergie électrique (L1).

2. Dispositif de commande (2) selon la revendication 1,
- dans lequel le premier élément de détection de courant (R1) et le deuxième élément de détection de courant (R2) sont des résistances shunt, qui de préférence ont une même valeur de résistance.

3. Dispositif de commande (2) selon la revendication 1 ou 2,
- dans lequel une entrée de l'étage convertisseur continu-continu (5) est électriquement reliée en série à une sortie de l'étage convertisseur élévateur (4).

4. Dispositif de commande (2) selon l'une quelconque des revendications précédentes,
- dans lequel le deuxième élément de stockage d'énergie électrique (L1) est électriquement relié à une seconde borne du commutateur (S1), de telle sorte que le commutateur (S1) est électriquement relié entre le deuxième élément de stockage d'énergie électrique (L1) et le deuxième élément de détection de courant (R2) ; et
- dans lequel le premier élément de stockage d'énergie électrique (R1) est électriquement relié par le biais de la deuxième diode (DB) à la deuxième borne du commutateur (S1), de telle sorte que l'anode de la deuxième diode (DB) est électriquement reliée au premier élément de stockage d'énergie électrique (LB) et que la cathode de la deuxième diode (DB) est électriquement reliée à la deuxième borne du commutateur (S1).

5. Dispositif de commande (2) selon l'une quelconque des revendications précédentes,
- dans lequel le troisième élément de détection de courant (R3) et le quatrième élément de détection de courant (R4) sont des résistances shunt, qui de préférence ont la même valeur de résistance.

6. Dispositif de commande (2) selon l'une quelconque des revendications précédentes,
- dans lequel l'étage convertisseur élévateur (4) et l'étage convertisseur continu-continu (5) sont reliés électriquement l'un à l'autre par le biais d'un troisième élément de stockage d'énergie électrique (8) ou par le biais d'un circuit de correction de facteur de puissance passif (9), dans lequel de préférence le circuit de correction de facteur de puissance passif (9) est un circuit de remplissage de creux.

7. Dispositif de commande (2) selon l'une quelconque des revendications précédentes,
- dans lequel l'étage convertisseur continu-continu (5) est un étage convertisseur à transfert indirect ou un étage convertisseur abaisseur.

8. Dispositif de commande (2) selon l'une quelconque des revendications précédentes,
- dans lequel l'étage convertisseur continu-continu (5) comprend le commutateur (S1) ; ou
- dans lequel l'étage convertisseur élévateur (4) comprend le commutateur (S1).

9. Dispositif d'éclairage (1) comprenant
- un dispositif de commande (2) selon l'une quelconque des revendications précédentes, et
- des moyens d'éclairage (7) reliés électriquement aux bornes de sortie (OUT2, OUT2') du dispositif de commande (2),
- dans lequel le dispositif de commande (2) est configuré pour fournir les moyens d'éclairage (7) avec de l'énergie électrique.
